# EUROPÄISCHE PATENTSCHRIFT

(11) **EP 1 097 032 B1**
(45) Veröffentlichungstag und Bekanntmachung des Hinweises auf die Patenterteilung: **25.09.2002**
(21) Anmeldenummer: 99930910.7
(22) Anmeldetag: 07.07.1999
(51) Int. Cl.: B27M 3/00, E04C 2/12, B32B 21/13, B32B 7/08

(54) **VORGEFERTIGTES SCHICHTHOLZELEMENT**
PREFABRICATED LAMINATED WOOD MEMBER
ELEMENT EN BOIS STRATIFIE PREFABRIQUE

(30) Priorität: 13.07.1998 AT 120598
(43) Veröffentlichungstag der Anmeldung: 09.05.2001
(73) Patentinhaber: Thoma, Erwin, 5600 St. Johann/Pongau (AT)
(72) Erfinder: Thoma, Erwin, 5600 St. Johann/Pongau (AT)
(74) Vertreter: Babeluk, Michael, Dipl.-Ing. Mag.
(86) Internationale Anmeldenummer: AT9900172
(87) Internationale Veröffentlichungsnummer: WO00003850

(56) Entgegenhaltungen:
- DE-A- 2 745 681
- DE-A- 3 840 093
- DE-A- 19 533 638
- DE-A- 19 537 298
- DE-U- 29 721 848
- FR-A- 2 659 703
- GB-A- 292 734
- SU-A- 1 025 831

## Beschreibung

Die Erfindung betrifft ein vorgefertigtes Schichtholzelement nach dem Oberbegriff von Patentanspruch 1 (siehe SU 1 025 831 A) und ein verfahren zur Herstellung des beanpruchten Schichtholzelements gemäß Anspruch 11.

Im Fertigbau werden vorgefertigte Elemente verwendet, die als Wand- und/oder Deckenelement ausgebildet sind und an der Baustelle montiert werden. Es ist bekannt, solche Elemente als Beton-Fertigteile zu gießen. Weiter ist es bekannt, solche Elemente, soweit diese als Wandelemente dienen, als Leichtbauplatten aus Holzwolle, Holzfaser oder Holzspan herzustellen. Diese Leichtbauplatten sind nur als Verkleidungsplatten geeignet, sind jedoch nicht als tragende Teile einsetzbar. Weiters sind Wandelemente bekannt, die aus einem Rahmen bestehen, der mit Deckplatten geschlossen und mit Isoliermaterial gefüllt ist. Auch diese Elemente sind nicht als tragende Elemente geeignet.

Im Holzhausbau ist der Fachwerkbau bekannt, bei welchem ein tragendes Gerippe der Wände aus verleimten Holzbindern errichtet wird, das dann durch nicht tragfähige oder nicht ausreichend tragfähige Stoffe ausgefacht wird. Der Fachwerkbau eignet sich nicht für die Fertigbauweise.

Schließlich ist der Blockbau bekannt, bei welchem massive Holzbalken waagrecht übereinander geschichtet werden. Auch dieser Blockbau eignet sich nicht für die Fertigbauweise. Die waagrechte Anordnung der Balken kann zu unterschiedlichem Setzverhalten und dadurch zu einem Verziehen der Wände führen.

Weiters sind verschiedene Systeme bekannt, bei denen Träger oder Wand bzw. Deckenelemente aus verleimten oder vernagelten Brettschichten bestehen.

Bekannte Schichtholzelemente, wie beispielsweise Paneelplatten, bestehen aus mehreren Lagen miteinander verleimten Hölzern und werden für Innenausbauten und Möbel verwendet. Durch die zusätzlichen Bindungsstoffe sind Emissionen unvermeidlich. Darüber hinaus bewirken Bindungsstoffe eine Diffusionssperre bzw. -bremse, welche den Feuchtigkeitsaustausch ver- bzw. behindert. Außerdem treten durch chemische Bindungsstoffe wie Kunstharzleime oder dergleichen Probleme bei der Entsorgung von Rest- und Altmaterial auf, da bei der Verbrennung schädliche Verbindungen freigesetzt werden. Ein weiterer Nachteil ist, dass kaum Langzeiterfahrungen für verleimte Schichtholzelemente vorliegen, so dass keine zuverlässigen Aussagen über das Alterungsverhalten und die Qualitätsänderungen nach jahrzehntelanger Nutzung als Wandelement gemacht werden können. Solche Schichtholzelemente sind beispielsweise in der AU 80 770/82 B, der SU 1 377 352 A oder der EP 0 194 238 B gezeigt.

Die Verwendung von Dübeln in anderem Zusammenhang ist an sich ebenfalls bekannt. So ist beispielsweise aus der DE 727 246 A eine Eckverbindung für die Herstellung von verwindungssteifen Fensterrahmen gezeigt, bei der eine Nutund Federverbindung zweier Bauteile zusätzlich durch einen Dübel gesichert ist. Solche Eckverbindungen sind jedoch nur für bestimmte Anwendungen einsetzbar und nicht dazu geeignet, Wandelemente auszubilden.

Die SU 1 025 831 A betrifft ein Verfahren zur Fertigung eines Trägers aus Holz. Wesentlich für dieses Verfahren ist, dass der Träger, bei dem es sich offensichtlich um einen sogenannten Leimbinder handelt, so verklebt werden soll, dass eine haltbare und dauerhafte Verbindung entsteht, die auch einen ausreichenden Brandwiderstand bietet. Die Verbindung der einzelnen Lagen des Trägers erfolgt also primär durch die Klebstoffschicht und nicht durch die Stifte. Es handelt sich dabei um einen Träger, also einen Bauteil mit einer großen Längsabmessung und dazu vergleichbar kleinen Querschnitt, wogegen die vorliegende Erfindung ein flächiges Bauelement betrifft, aus dem Wandelemente oder dgl. zusammengesetzt werden können.

Der Erfindung liegt die Aufgabe zugrunde, diese Nachteile zu vermeiden und ein Schichtholzelement zu schaffen, welche ohne Verleimungen und/oder flächigen Nagelverbindungen auskommt. Darüber hinaus soll eine Holzbauweise für Bauund Tragwerke, insbesondere Häuser, bereitgestellt werden, welche die Vorteile eines Massivbaues mit den Vorteilen des Fertigbaues vereinigt.

Erfindungsgemäß wird dies durch eine Ausbildung entsprechend Anspruch 1 und ein Verfahren entsprechend Anspruch 11 erreicht. Auf diese Weise wird ein Schichtholzelement geschaffen, welches vollständig ohne chemische oder metallische Bindemittel hergestellt werden kann. Eine besonders gute Verbindung der einzelnen Lagen wird erreicht, wenn die Dübel rasterartig angeordnet sind. Das Schichtholzelement ist vollständig einstofflich aufgebaut und besteht ausschließlich aus Holz. Rest- und Altteile können problemlos entsorgt werden.

Um die statischen Eigenschaften und die Steifigkeit des Schichtholzelementes zu verbessern ist vorgesehen, dass das Schichtholzelement mindestens drei Lagen von Hölzern aufweist, wobei vorzugsweise die Hölzer zumindest einer inneren Lage durch Pfosten gebildet sind. Insbesondere ist es dabei günstig, wenn zumindest zwei in gleicher Richtung angeordnete Lagen von Pfosten vorgesehen sind, welche vorzugsweise zueinander benachbart sind. Zumindest eine äußere Lage von Hölzern kann durch Bretter gebildet sein.

Um gute statische Eigenschaften zu erzielen und eine hohe Belastbarkeit des Schichtholzelementes in Längsrichtung zu erreichen, ist es vorteilhaft, wenn die Stärke der Lagen von Hölzern zwischen etwa 8 mm und 120 mm beträgt. Die Stärke der einzelnen Lagen wird dabei nach den jeweiligen Erfordernissen festgesetzt, wobei die inneren Lagen üblicherweise nach statischen, die äußeren Lagen nach schall- und wärmedämmenden Gesichtspunkten ausgelegt werden. Die Stärke der Lagen kann daher entweder von außen nach innen oder von innen nach außen zunehmen. Es ist selbstverständlich auch möglich, alle Lagen gleich stark auszuführen. Die Breite der einzelnen Hölzer kann dabei zwischen 40 mm und 400 mm betragen.

In einer besonders bevorzugten Ausführungsvariante der Erfindung ist vorgesehen, dass die Bindung zwischen den Dübeln und den Hölzern im wesentlichen durch den Kraftschluss infolge Volumenvergrößerung der Dübel durch Feuchtigkeitsausgleich zwischen den Hölzern der Lagen und den Dübeln erfolgt. Die Herstellung der Schichtholzelemente erfolgt dadurch, dass der Feuchtigkeitsgehalt der Dübel unter dem Feuchtigkeitsgehalt der Hölzer der Lagen abgesenkt wird und die trockenen Dübel in Bohrungen in die Lagen von Hölzern eingebracht werden, wobei die Querschnitte der Dübel und der Bohrungen so bemessen sind, dass infolge der Volumsausdehnung der Dübel durch den Holzfeuchteausgleich zwischen den Hölzern und den Dübeln eine kraftschlüssige Bindung bewirkt wird. Durch gezielt eingesetzte Holzfeuchteunterschiede zwischen Dübel und den Hölzern der einzelnen Lagen wird eine besonders hohe Verbindungsqualität erzielt. Die Dübel werden entsprechend stärker getrocknet als die Bretter, und nehmen dadurch zum Feuchteausgleich nach der Verdübelung Wasser vom umgebenden Holz auf. Das bewirkt eine Volumensausdehnung und eine ausgezeichnete Verkeilung und Auszugsfestigkeit des Dübels. Eine zusätzliche Sicherheit und eine schnellere Verarbeitung wird ermöglicht, wenn die Dübel durch stirnseitig eingetriebene Keile gesichert sind. Bei der Herstellung des Schichtholzelements wird der vollständige Halt der Dübel nicht sofort erreicht, da der Feuchteausgleich eine gewisse Zeit benötigt. Durch das Eintreiben von Keilen in die Dübel kann das Schichtholzelement sofort aus der Presse entnommen werden und besitzt die endgültige Festigkeit. Dies ermöglicht eine Beschleunigung des Produktionsablaufs. Zusätzlich dazu oder alternativ dazu ist es auch möglich, die Dübel vor dem Eintreiben mit einer geeigneten Mischung aus Topfen, Kalk und Wasser zu behandeln, was insbesondere die quellende Wirkung verstärkt. Eine ähnliche Zusammensetzung wurde vor vielen Jahren auch als Kaseinleim bezeichnet und bei Holzverbindungen verwendet.

Bei der Verwendung von erfindungsgemäßen Schichtholzelementen im Hochbau ist es in vielen Fällen erforderlich, zur Aufnahme von Windkräften des Gebäudes eine große Widerstandsfähigkeit der Elemente gegenüber Scherkräften in der Ebene des Bauelements nachweisen zu können. Bei rechteckigen Bauwerken können durch Windbelastung solche Querkräfte in den Wänden auftreten, die parallel zur Windrichtung ausgerichtet sind, und bei mangelnder Widerstandsfähigkeit würden diese Querkräfte dazu führen, die Schichtholzelemente parallelogrammartig zu verformen. Unter normalen Umständen wird diese Verformung durch die Reibung zwischen den einzelnen Holzschichten verhindert. Da der rechnerische Nachweis der Reibungskräfte in manchen Fällen schwierig ist, wird gegebenenfalls eine Lage diagonal orientierter Hölzer vorgesehen. Auf diese Weise können auch bei großen auftretenden Windkräften die entsprechenden Festigkeitswerte problemlos nachgewiesen werden.

Fertigteile für Bauwerke werden dabei dadurch gebildet, dass mehrere Schichtholzelemente zu großflächigen Einheiten, insbesondere zu Wand-, Decken- und Dachelementen verbunden sind, wobei vorzugsweise die Verbindung über Nut/Feder, über Blattung, Schwalbenschwanz und/oder Schrauben erfolgt.

Der Grundgedanke dieser Holzbauweise besteht darin, Wand, Decken und Deckelement aus verschiedenen Brett- bzw. Holzpfostenschichten herzustellen, wobei die Einzelteile in verschiedenen Richtungen in der Ebene des Elementes liegen. Die Verbindung der einzelnen Schichten untereinander wird durch ein Raster von Holzdübeln hergestellt. Die statische Anforderungen an das jeweilige Element werden je nach Verwendung als Wand, Decken- oder Dachelement und je nach statischem Anspruch durch die entsprechende Dimensionierung (Stärke) der einzelnen Schichten erfüllt.

Die dadurch erzielten statischen Eigenschaften und die Steifigkeit der Einzelelemente ermöglichen mehrgeschossige Bau- Konstruktionen ohne zusätzlichem Gerippe aus tragenden Balken oder anderen Materialien.

Bei den Wandelementen nehmen stehende Pfosten innerhalb des holzverdübelten Schichtverbandes des Elements durch ihre hervorragende Stützbelastbarkeit die Kräfte auf. Im Decken- und Dachbereich werden die auftretenden Kräfte durch Brett- und Pfostenschichten in Längsrichtung der Decken bzw. Dachspannung aufgenommen.

Durch die gegeneinander versetzte Holzfaser in den Elementen, bzw. durch den stehenden Holzfaserverlauf in Wänden treten keine Setzungen der Wände auf, so dass eine dauerhafte Stabilität der Bauten gewährleistet ist.

Da die Elemente einzig aus Holz hergestellt werden, ergeben sich hervorragende bauphysiologische Eigenschaften für die daraus errichtete Bauten. Die Wände sind vollkommen diffusionsoffen, so dass Feuchtigkeit durchdiffundieren kann. Emissionen aus Kunstharzleim sind ausgeschlossen. Darüber hinaus ermöglicht diese Bauweise beliebig starke Wandkonstruktionen, so dass mit entsprechend starken Aufbauten auch ohne zusätzlichen Dämmstoff ausgezeichnete K-Werte ermöglicht werden. Die Massivholzelemente für Wände und Decken ergeben eine sehr gute Schalldämmung und erfüllen durch die ausschließliche Herstellung aus Holz alle ökologischen Erfordernisse in hervorragender Weise.

Aus diesen Massivholzelementen bestehende Wände oder Decken können in äußerst einfacher und rationeller Weise bearbeitet werden. Zum Verlegen von Rohrleitungen und Kabeln können in einfacher Weise nutenartige Ausnehmungen in die Holzelemente gefräst oder Durchbrüche gebohrt werden. Auch das Einbringen von Nägeln, Schrauben oder Dübel in die Wände ist äußerst einfach möglich. Darüber hinaus kann bei der Herstellung durch das gezielte Weglassen einzelner Pfosten- oder Brettschichten und Freistellen von benachbarten Hölzern und durch das Fräsen von Durchbrüchen ein System von vorgefertigten Kabelschächten in den Elementen geschaffen werden.

An den Elementen können bei der Produktion als Vorfertigung oder nachträglich am Bau die verschiedensten Systeme von Wärmedämmungen wie Vollwärmeschutz, Putzträger und hinterlüftete Fassaden angebracht werden.

Die Erfindung wird im folgenden anhand der in den Figuren dargestellten Ausführungsbeispielen näher erläutert.
- Fig. 1: zeigt schematisch eine Schrägansicht eines erfindungsgemäßen Schichtholzelementes,
- Fig. 2: zeigt eine Darstellung entsprechend der Fig. 1, in der ein geringfügig abgewandeltes Schichtholzelement gezeigt ist und
- Fig. 3: zeigt schematisch einen teilweisen Querschnitt durch ein erfindungsgemäßes Schichtholzelement.

Das Schichtholzelement 1 besteht aus mehreren Lagen 2a, 2b, 2c, 2d, 2e und 2f von Hölzern 3a, 3b, 3c, 3d, 3e und 3f. Dabei weisen Hölzer 3a, 3b und 3c bzw. 3d, 3e und 3f von benachbarten Lagen 2a, 2b, 2c bzw. 2d, 2e und 2f unterschiedliche Richtungen auf. Die Hölzer 3c und 3d der inneren Lagen 2c und 2d sind als Pfosten ausgebildet, die gleich orientiert sind. Die Stärke sᵢ der Hölzer 3c, 3d der inneren Lagen 2c und 2d ist größer als die Stärke sₐ und sₘ der Hölzer 2a, 2b bzw. 2e und 2f der äußeren Lagen 3a, 3b bzw. 3e und 3f.

Die Lagen 2a bis 2f sind durch Dübel 4 miteinander verbunden, welche etwa normal zu den Lagen 2a bis 2f in die Hölzer 3a bis 3f eingesteckt werden. Die Dübel 4 sind rasterartig angeordnet.

Die Stärke sᵢ, sₐ, sₘ der Lagen 2a bis 2f kann je nach Verwendungszweck und statischen Anforderungen zwischen 8 mm und 120 mm variiert und beliebig kombiniert werden. Eine besondere Verbindungsqualität zwischen den einzelnen Lagen 2a bis 2f und den Dübeln 4 wird erzielt, indem Holzfeuchteunterschiede zwischen Dübel 4 und den Hölzern 3a bis 3f gezielt eingesetzt werden. Die Dübel 4 werden entsprechend stärker getrocknet als die Hölzer 3a bis 3f und nehmen dadurch zum Feuchteausgleich nach der Verdübelung Wasser vom umgebenden Holz auf. Dies bewirkt eine Volumensausdehnung und eine ausgezeichnete Verkeilung und Auszugsfestigkeit der Dübel 4. Die Durchmesser der Dübel 4 können je nach Elementstärke und Verwendung zwischen 8 und 40 mm betragen. Die Dübellänge variiert von der Stärke einiger Lagen 2a bis 2f bis zur Stärke des gesamten Schichtholzelementes 1.

Mehrere Schichtholzelemente können miteinander durch herkömmliche Nut/Feder, Überblattungs- bzw. Schwalbenschwanzfräsungen oder durch Schrauben zu Dach- und Wandelementen verbunden werden. Auch Eckverbindungen sind auf diese Weise möglich. Für Eckverbindungen werden zusätzlich große, bis 100 mm starke Dübel nach dem beschriebenen Prinzip des gezielten Holzfeuchteunterschiedes eingesetzt.

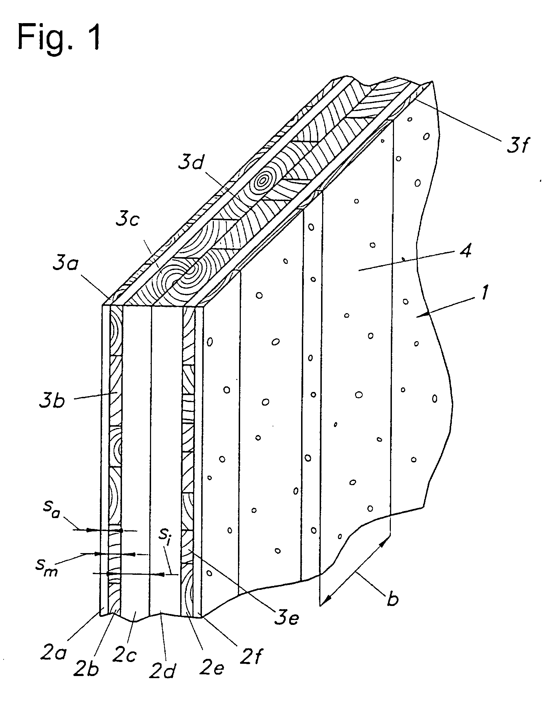

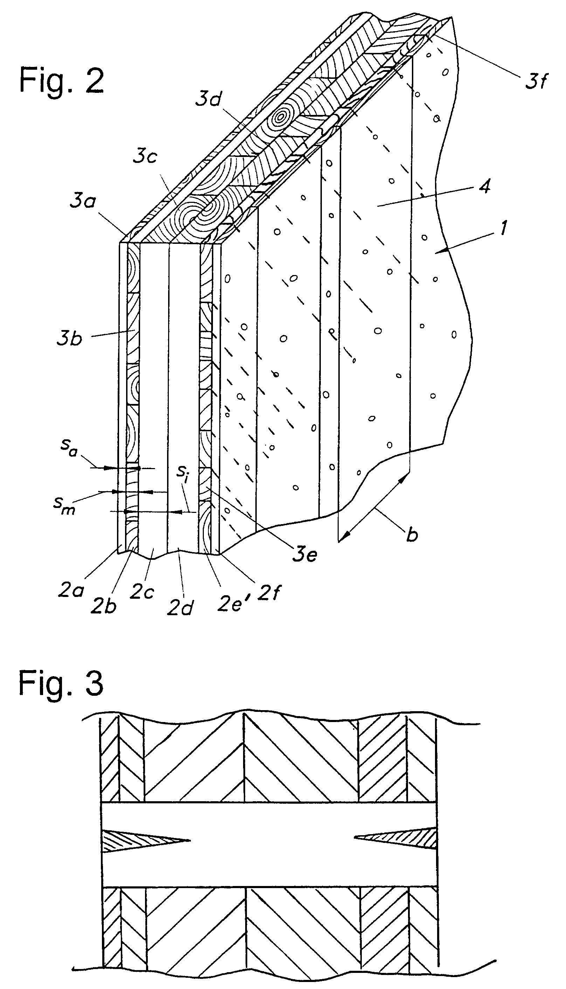

Das Schichtholzelement von Fig. 2 entspricht weitgehend dem von Fig. 1. Gleiche Bauteile sind durch gleiche Bezugszeichen bezeichnet. Unterschiedlich ist lediglich, dass die Lage 2e' aus Hölzern 3e' zusammengesetzt ist, die etwa in einem Winkel 45° zu den übrigen Hölzern angeordnet sind. Der Verlauf dieser Hölzer 3e' ist mit unterbrochenen Linien angedeutet.

In der Fig. 3 ist in vergrößertem Maßstab ein Dübel 4 dargestellt, der die Lagen 2a bis 2f durchdringt. Stirnseitig ist in den Dübel 4 von beiden Seiten jeweils ein Keil 5 eingetrieben, um diesen Dübel 4 auch schon zu sichern, wenn der Feuchtigkeitsausgleich noch nicht stattgefunden hat.

Mit den Schichtholzelementen 4 können mehrgeschossige Bauten ohne zusätzliche Stützgerüste nach dem Prinzip des Fertigteilbaues realisiert werden. Dabei können geschosshohe Einzelwände oder Rastermaß-Teilelemente, die sich mit Rasterbreiten über mehrere Geschosse erstrecken, gefertigt werden.

Werden mehrere Schichtholzelemente 4 zu Decken- bzw. Dachelementen zusammengesetzt, so können diese ein Lastfeld zwischen zwei Auflagern der Länge nach überbrücken. Genauso ist es möglich, auf diese Weise Decken- bzw. Dachelemente in vollständigen Geschosslängen auszuführen, wobei selbstverständlich statische Anforderungen zu berücksichtigen sind.

## Patentansprüche

1. Vorgefertigtes Schichtholzelement (1) mit mindestens drei miteinander verbundenen Lagen (2a, 2b, 2c, 2d, 2e, 2f) von unmittelbar nebeneinander angeordneten brett- oder pfostenartigen Hölzern (3a, 3b, 3c, 3d, 3e, 3f), wobei die Hölzer (3a, 3b, 3c, 3d, 3e, 3f) von zumindest zwei benachbarten Lagen (2a, 2b, 2c, 2d, 2e, 2f) unterschiedliche Richtungen aufweisen, **dadurch gekennzeichnet, dass** das Schichtholzelement (1) einstofflich aufgebaut ist und nur aus Holz besteht und dass die Verbindung der einzelnen Lagen (2a, 2b, 2c, 2d, 2e, 2f) durch Dübel (4) erfolgt, welche die Lagen (2a, 2b, 2c, 2d, 2e, 2f) von Hölzern (3a, 3b, 3c, 3d, 3e, 3f) durchsetzen.

2. Schichtholzelement (1) nach Anspruch 1, **dadurch gekennzeichnet, dass** die Dübel (4) rasterartig angeordnet sind.

3. Schichtholzelement (1) nach einen der Ansprüche 1 oder 2, **dadurch gekennzeichnet, dass** zumindest zwei benachbarte in gleicher Richtung angeordnete Lagen (2d, 2e) von als Pfosten ausgebildeten Hölzern (3d, 3e) vorgesehen sind und dass die Pfosten in Breitenrichtung gegeneinander versetzt sind.

4. Schichtholzelement (1) nach einem der Ansprüche 1 bis 3, **dadurch gekennzeichnet, dass** zumindest eine äußere Lage (2a, 2f) von Hölzern (3a, 3f) durch Bretter gebildet ist.

5. Schichtholzelement (1) nach einem der Ansprüche 1 bis 4, **dadurch gekennzeichnet, dass** die Stärke (sₐ, sₘ, sᵢ) der Lagen (2a, 2b, 2c, 2d, 2e, 2f) von Hölzern (3a, 3b, 3c, 3d, 3e, 3f) von außen nach innen zunimmt, wobei die Stärke (sₐ, sₘ, sᵢ) der Lagen (2a, 2b, 2c, 2d, 2e, 2f) vorzugsweise zwischen etwa 8 mm und 120 mm beträgt.

6. Schichtholzelement (1) nach einem der Ansprüche 1 bis 4, **dadurch gekennzeichnet, dass** die Stärke (sₐ, sₘ, sᵢ) der Lagen (2a, 2b, 2c, 2d, 2e, 2f) von Hölzern (3a, 3b, 3c, 3d, 3e, 3f) von innen nach außen zunimmt, wobei die Stärke (sₐ, sₘ, sᵢ) der Lagen (2a, 2b, 2c, 2d, 2e, 2f) vorzugsweise zwischen etwa 8 mm und 120 mm beträgt.

7. Schichtholzelement (1) nach einem der Ansprüche 1 bis 6, **dadurch gekennzeichnet, dass** zumindest eine Lage (2a, 2b, 2c, 2d, 2e, 2f) eine nutartige Ausnehmung aufweist, wobei die Ausnehmung vorzugsweise durch Fräsen oder Freistellen von benachbarten Hölzern (3a, 3b, 3c, 3d, 3e, 3f) gebildet ist.

8. Schichtholzelement (1) nach einem der Ansprüche 1 bis 7, **dadurch gekennzeichnet, dass** die Bindung zwischen den Dübeln (4) und den Hölzern (3a, 3b, 3c, 3d, 3e, 3f) im wesentlichen durch den Kraftschluss infolge Volumenvergrößerung durch Feuchtigkeitsausgleich zwischen den Hölzern (3a, 3b, 3c, 3d, 3e, 3f) der Lagen (2a, 2b, 2c, 2d, 2e, 2f) und den Dübeln (4) erfolgt.

9. Schichtholzelement (1) nach einem der Ansprüche 1 bis 8, **dadurch gekennzeichnet, dass** die Dübel (4) durch stirnseitig eingetriebene Keile (5) gesichert sind.

10. Schichtholzelement (1) nach einem der Ansprüche 1 bis 9, **dadurch gekennzeichnet, dass** neben parallel oder rechtwinkelig zueinander angeordneten Lagen (2a, 2b, 2c, 2d, 2f) eine zusätzliche Lage (2e') von Hölzern (3e') vorgesehen ist, die schräg zu den übrigen Lagen (2a, 2b, 2c, 2d, 2f) angeordnet ist.

11. Verfahren zur Herstellung eines Schichtholzelementes (1) nach einem der Ansprüche 1 bis 10, **dadurch gekennzeichnet, dass** der Feuchtigkeitsgehalt der Dübel (4) unter dem Feuchtigkeitsgehalt der Hölzer (3a, 3b, 3c, 3d, 3e, 3f) der Lagen (2a, 2b, 2c, 2d, 2e, 2f) abgesenkt wird und die trockenen Dübel (4) in Bohrungen in die Lagen (2a, 2b, 2c, 2d, 2e, 2f) von Hölzern (3a, 3b, 3c, 3d, 3e, 3f) eingebracht werden, wobei die Querschnitte der Dübel (4) und der Bohrungen so bemessen sind, dass infolge der Volumsausdehnung der Dübel (4) durch den Holzfeuchteausgleich zwischen den Hölzern (3a, 3b, 3c, 3d, 3e, 3f) und den Dübeln (4) eine kraftschlüssige Bindung bewirkt wird.

12. Anordnung unter Verwendung von Schichtholzelementen (1) nach einem der Ansprüche 1 bis 10, **dadurch gekennzeichnet, dass** mehrere Schichtholzelemente (1) zu großflächigen Einheiten, insbesondere zu Wand-, Deckenund Dachelementen verbunden sind, wobei vorzugsweise die Verbindung über Nut/Feder, über Blattung, Schwalbenschwanz und/oder Schrauben erfolgt.

## Claims

1. A prefabricated laminated wood member (1) having at least three interconnected layers (2a, 2b, 2c, 2d, 2e, 2f) of immediately adjacent pieces of wood (3a, 3b, 3c, 3d, 3e, 3f) in form of boards or mounts, with said pieces of wood (3a, 3b, 3c, 3d, 3e, 3f) of at least two adjacent layers (2a, 2b, 2c, 2d, 2e, 2f) having different directions, **characterized in that** the laminated wood member (1) is provided with a single-material structure and only consists of wood and that the connection of the individual layers (2a, 2b, 2c, 2d, 2e, 2f) is produced by dowels (4) which penetrate the layers (2a, 2b, 2c, 2d, 2e, 2f) of wood (3a, 3b, 3c, 3d, 3e, 3f).

2. A laminated wood member (1) as claimed in claim 1, **characterized in that** the dowels (4) are arranged in the manner of a grid.

3. A laminated wood member (1) as claimed in one of the claims 1 to 2, **characterized in that** at least two adjacent layers (2d, 2e) arranged in the same direction are provided by pieces of wood (3d, 3e) arranged as mounts and that the mounts are mutually offset in the direction of width.

4. A laminated wood member (1) as claimed in one of the claims 1 to 3, **characterized in that** at least one outer layer (2a, 2f) of wood (3a, 3f) is formed by boards.

5. A laminated wood member (1) as claimed in one of the claims 1 to 4, **characterized in that** the thickness (sₐ ,sₘ ,sᵢ) of the layers (2a, 2b, 2c, 2d, 2e, 2f) of wood (3a, 3b, 3c, 3d, 3e, 3f) increases from the outside to the inside, with the thickness (sₐ ,sₘ ,sᵢ) of the layers (2a, 2b, 2c, 2d, 2e, 2f) preferably being between approx. 8 mm and 120 mm.

6. A laminated wood member (1) as claimed in one of the claims 1 to 4, **characterized in that** that thickness (sₐ ,sₘ ,sᵢ) of the layers (2a, 2b, 2c, 2d, 2e, 2f) of wood (3a, 3b, 3c, 3d, 3e, 3f) increases from the inside to the outside, with the thickness (sₐ ,sₘ ,sᵢ) of the layers (2a, 2b, 2c, 2d, 2e, 2f) preferably being between approx. 8 mm and 120 mm.

7. A laminated wood member (1) as claimed in one of the claims 1 to 6, **characterized in that** at least one layer (2a, 2b, 2c, 2d, 2e, 2f) is provided with a groove-like recess, with the recess preferably being formed by milling or removing adjacent pieces of wood (3a, 3b, 3c, 3d, 3e, 3f).

8. A laminated wood member (1) as claimed in one of the claims 1 to 7, **characterized in that** the bonding between the dowels (4) and the wood (3a, 3b, 3c, 3d, 3e, 3f) substantially occurs by frictional connection as a result of volumetric expansion by humidity balance between the wood (3a, 3b, 3c, 3d, 3e, 3f) of the layers (2a, 2b, 2c, 2d, 2e, 2f) and the dowels (4).

9. A laminated wood member (1) as claimed in one of the claims 1 to 8, **characterized in that** the dowels (4) are secured by wedges (5) driven into the face sides.

10. A laminated wood member (1) as claimed in one of the claims 1 to 9, **characterized in that** in addition to layers (2a, 2b, 2c, 2d, 2e, 2f) arranged mutually parallel or rectangularly an additional layer (2e') of wood (3e') is provided which is arranged obliquely to the other layers (2a, 2b, 2c, 2d, 2f).

11. A method for producing a laminated wood member (1) as claimed in one of the claims 1 to 10, **characterized in that** the humidity content of the dowels (4) is decreased under the humidity content of the wood (3a, 3b, 3c, 3d, 3e, 3f) of the layers (2a, 2b, 2c, 2d, 2e, 2f) and the dry dowels (4) are introduced into bores in the layers (2a, 2b, 2c, 2d, 2e, 2f) of wood (3a, 3b, 3c, 3d, 3e, 3f), with the cross sections of the dowels (4) and the bores being dimensioned in such a way that a frictional connection is produced as a result of the volumetric expansion of the dowels (4) as a result of the humidity balance between the pieces of wood (3a, 3b, 3c, 3d, 3e, 3f) and the dowels (4).

12. An arrangement by using laminated wood members (1) as claimed in one of the claims 1 to 10, **characterized in that** several laminated wood members (1) are joined into large-area units, and wall, ceiling and roof elements in particular, with the connection preferably being made by way of tongue-and-groove joints, halved joints, dovetail joints and/or screws.

## Revendications

1. Elément préfabriqué en bois stratifié (1) avec au moins trois couches (2a, 2b, 2c, 2d, 2e, 2f) liées ensemble, dont les constituants en bois (3a, 3b, 3c, 3d, 3e, 3f) se présentent sous la forme de planches ou de poteaux en bois se jouxtant directement et où les constituants en bois (3a, 3b, 3c, 3d, 3e, 3f) d'au moins deux couches adjoignantes (2a, 2b, 2c, 2d, 2e, 2f) sont disposés suivant des directions qui sont différentes, **caractérisé en ce que** l'élément en bois stratifié (1) est réalisé d'une seule pièce, qu'il est constitué seulement de bois et que la fixation des couches individuelles (2a, 2b, 2c, 2d, 2e, 2f) se fait à l'aide de chevilles (4) qui traversent les couches (2a, 2b, 2c, 2d, 2e, 2f) des constituants en bois (3a, 3b, 3c, 3d, 3e, 3f).

2. Elément en bois stratifié (1) selon la revendication 1, **caractérisé en ce que** les chevilles (4) sont disposées en réseau.

3. Elément en bois stratifié (1) selon l'une des revendications 1 ou 2, **caractérisé en ce qu**'au moins deux couches adjoignantes (2d, 2e) de constituants en bois orientés suivant la même direction sont réalisées avec des poteaux (3d, 3e) et en ce que les poteaux sont décalés les uns par rapport aux autres dans la direction de la largeur.

4. Elément en bois stratifié (1) selon l'une des revendications 1 à 3, **caractérisé en ce qu'**au moins une couche externe (2a, 2f) est réalisée avec des constituants en bois (3a, 3f) ayant la forme de planches.

5. Elément en bois stratifié (1) selon l'une des revendications 1 à 4, **caractérisé en ce que** l'épaisseur (sₐ, sₘ, sᵢ) des couches (2a, 2b, 2c, 2d, 2e, 2f) des constituants en bois (3a, 3b, 3c, 3d, 3e, 3f), augmente en allant de l'extérieur vers l'intérieur, l'épaisseur (sₐ, sₘ, sᵢ) des couches (2a, 2b, 2c, 2d, 2e, 2f) se situant, de préférence, environ entre 8 mm et 120 mm.

6. Elément en bois stratifié (1) selon l'une des revendications 1 à 4, **caractérisé en ce que** l'épaisseur (sₐ, sₘ, sᵢ) des couches (2a, 2b, 2c, 2d, 2e, 2f) des constituants en bois (3a, 3b, 3c, 3d, 3e, 3f) augmente en allant de l'intérieur vers l'extérieur, l'épaisseur (sₐ, sₘ, sᵢ) des couchés (2a, 2b, 2c, 2d, 2e, 2f) se situant, de préférence, environ entre 8 mm et 120 mm.

7. Elément en bois stratifié (1) selon l'une des revendications 1 à 6, **caractérisé en ce qu'**au moins une couche (2a, 2b, 2c, 2d, 2e, 2f) présente une creusure en forme de gorge, cette creusure étant obtenue, de préférence, par fraisage ou par espacement de constituants en bois avoisinants (3a, 3b, 3c, 3d, 3e, 3f).

8. Elément en bois stratifié (1) selon l'une des revendications 1 à 7, **caractérisé en ce que** la fixation entre les chevilles (4) et les constituants en bois (3a, 3b, 3c, 3d, 3e, 3f) est assurée essentiellement par les forces de friction générées par suite de l'augmentation du volume due à égalisation de l'humidité entre les constituants en bois (3a, 3b, 3c, 3d, 3e, 3f) des couches (2a, 2b, 2c, 2d, 2e, 2f) et les chevilles (4).

9. Elément en bois stratifié (1) selon l'une des revendications 1 à 8, **caractérisé en ce que** les chevilles (4) sont immobilisées par des coins (5) enfoncés depuis la face externe.

10. Elément en bois stratifié (1) selon l'une des revendications 1 à 9, **caractérisé en ce qu**'à côté des couches (2a, 2b, 2c, 2d, 2f) disposées de manière mutuellement parallèle ou perpendiculaire, on prévoit une couche additionnelle (2e') de composants en bois (3e') qui sont disposés en biais par rapport aux couches susmentionnées (2a, 2b, 2c, 2d, 2f).

11. Procédé pour fabriquer un élément stratifié en bois (1) selon l'une des revendications 1 à 10, **caractérisé en ce que** la teneur en humidité des chevilles (4) est abaissée en dessous de la teneur en humidité des constituants en bois (3a, 3b, 3c, 3d, 3e, 3f) des couches (2a, 2b, 2c, 2d, 2e, 2f) et **en ce que** les chevilles séchées (4) sont introduites dans des trous aménagés dans les couches (2a, 2b, 2c, 2d, 2e, 2f) des constituants en bois (3a, 3b, 3c, 3d, 3e, 3f), la section transversale des chevilles (4) et la section transversale des trous étant choisies de manière à ce qu'à la suite de l'augmentation du volume des chevilles (4) consécutive à l'équilibrage de l'humidité entre les constituants en bois (3a, 3b, 3c, 3d, 3e, 3f) et les chevilles (4), le tout soit maintenu ensemble par l'effet des forces de friction.

12. Agencement mettant en oeuvre des éléments stratifiés en bois (1) selon l'une des revendications 1 à 10, **caractérisé en ce que** plusieurs éléments stratifiés en bois (1) sont fixés ensemble pour former des unités à grande superficie, en particulier en vue de constituer des éléments de parois, de revêtement de sols ou de toits, la fixation se faisant, de préférence, à l'aide d'un système de gorge et de languette, de queue d'aronde, par assemblage à mi-bois et / ou par des vis.
